# EUROPEAN PATENT SPECIFICATION

(11) **EP 3 932 800 B1**
(45) Date of publication and mention of the grant of the patent: **24.07.2024**
(21) Application number: 21192851.0
(22) Date of filing: 05.06.2019
(51) Int. Cl.: B64C 13/16, B64D 45/00, G01M 5/00, G05D 1/00, B64C 3/58, B64C 9/00, B64C 9/14, B64C 9/34, B64C 13/20

(54) **CONTROLLER ANS SYSTEM FOR REDUCING AIRCRAFT WING BENDING MOMENT**
STEUERGERÄT UND SYSTEM ZUR REDUZIERUNG DES FLUGZEUGFLÜGELBIEGEMOMENTS
CONTRÔLEUR ET SYSTÈME POUR RÉDUIRE LE MOMENT DE FLEXION D'UNE AILE D'AVION

(30) Priority: 06.06.2018 GB 201809316
(43) Date of publication of application: 05.01.2022
(62) Divisional of application: 19178575.7
(73) Proprietor: GE Aviation Systems Limited, Bishops Cleeve Cheltenham Gloucestershire GL52 8SF (GB)
(72) Inventor: SCHWINDT, Stefan, Cheltenham, GL52 8SF (GB)
(74) Representative: Openshaw & Co.

(56) References cited:
- WO-A1-2015/088967
- CN-A- 107 271 090
- US-A1- 2016 200 420
- US-A1- 2018 099 740
- US-B1- 9 064 357
- US-B2- 9 199 726

## Description

### TECHNICAL FIELD

The disclosure relates to a controller and system for reducing a bending moment of an aircraft when a sensed bending moment exceeds a predetermined threshold.

### BACKGROUND

Aircraft, during flight, are susceptible to varying environmental conditions. Particularly, varying atmospheric conditions such as wind, pressure, and weather, can lead to temporary high wing loading or bending moment. During flight, wind gusts can provide for gust loads causing an uncontrolled increase in lift. Specifically, regulations specify that the gust loads that an aircraft needs to be able to withstand must meet worst-case scenario standards. Such regulations are traditionally met by providing additional material or structure extending through the aircraft fuselage and wings to strengthen the wings.

One existing solution includes accelerometer strain gauges positioned in the wings of the aircraft. Once a gust acts upon the wing, the accelerometer measures the force imparted to the wings. The wing deploys spoilers to destroy the excess lift generated by the gust. However, such accelerometers can only measure gust forces as an acceleration and can fail to identify a bending moment that remains at critical after initially deploying the spoilers, having a zero acceleration, or a small acceleration at maximum bending moment. US9199726 discloses wing load alleviation methods in which actuated deflections of a control surface of a winglet and a spoiler in response to a detected flight condition creates an incremental pressure field at the winglet. WO2015088967 discloses a fiber optic sensing and control system. US9064357 discloses vehicle dynamics control using integrated vehicle structural health management system. CN107271090 discloses a method for monitoring bending moment of an airplane wing in real time based on a fiber Bragg grating (FBG). US2018/099740 discloses a system and method for correcting wing twist of an aircraft. US 2016200420 discloses independent actuation of a plurality of flaperons in response to span-wise distributed torque readings obtained from sensors in the wings.

### BRIEF DESCRIPTION

The invention is set out in the accompanying claims.

[deleted]

[deleted]

### BRIEF DESCRIPTION OF THE DRAWINGS

In the drawings:
FIG. 1 is a front view of an aircraft depicting an updraft bending the aircraft wings, which have deployable spoilers.
FIG. 2 is a top down schematic view of another aircraft including a wing loading reduction system including sensors to sense a change in the shape of the wing.
FIG. 3 is a front view of the aircraft of FIG. 2 with deployed wing spoilers, in accordance with aspects described herein.
FIG. 4 is a block diagram illustrating a non-claimed method of operating the aircraft of FIG. 2 according to the wing loading reduction system.
FIG. 5 is a top down schematic view off yet another aircraft including a wing loading reduction system including an optical fiber, in accordance with aspects described herein.

### DETAILED DESCRIPTION

The disclosure relates to a wing loading reduction system and controller for monitoring a shape of a wing in order to decrease bending moment at a wing root where a wing attaches to an aircraft fuselage. While this description is primarily directed toward a monitoring system for an aircraft, it is also applicable to any environment susceptible to fluid forces acting against portions of the vehicle, such as that of a watercraft or other vehicle.

As used herein, the term "forward" or "upstream" refers to moving in a direction toward an inlet or beginning position, or a component being relatively closer to the inlet or beginning position as compared to another component. The term "aft" or "downstream" used in conjunction with "forward" or "upstream" refers to a direction toward an outlet or end position or being relatively closer to the outlet or end position as compared to another component. Furthermore, as used herein, the term "set" or a "set" of elements can be any number of elements, including only one.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

Also as used herein, while sensors can be described as "sensing" or "measuring" a respective value, sensing or measuring can include determining a value indicative of or related to the respective value, rather than directly sensing or measuring the value itself. The sensed or measured values can further be provided to additional or separate components. Such a provision can be provided as a signal, such as an electrical signal, to said additional or separate components. For instance, the measured value can be provided to a controller module or processor, and the controller module or processor can perform processing on the value to determine a representative value or an electrical characteristic representative of said value.

As used herein, a "system," a "controller," or a "controller module" can include at least one processor and memory. Non-limiting examples of the memory can include Random Access Memory (RAM), Read-Only Memory (ROM), flash memory, or one or more different types of portable electronic memory, such as discs, DVDs, CD-ROMs, etc., or any suitable combination of these types of memory. The processor can be configured to run any suitable programs or executable instructions designed to carry out various methods, functionality, processing tasks, calculations, algorithms, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

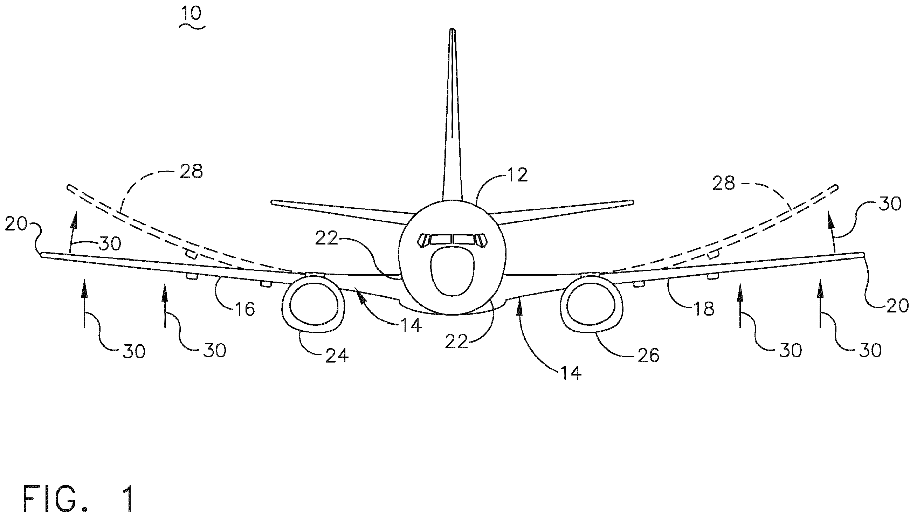

Referring now to FIG. 1, an aircraft 10 includes a fuselage 12, with a pair of wings 14 as a first wing 16 and a second wing 18 extending from the fuselage 12. The wings 14 extend between a tip 20 and a root 22. A first engine 24 can mount the first wing 16 and a second engine 26 can mount to the second wing 18. During operation of the aircraft 10, a gust 30 can act upon the wings 14, bending one or both of the wings 14 into bent positions 28, shown in broken line, and increasing the load on the wings 14 and bending moment at the root 22 of the wings 14 proportional to the gust load of the gust 30.

Such bending of the wings 14 due to the gusts 30 can include movement of the wings 14 in a plurality of directions, which can lead to a change in shape or position of the wings 14. Such a change in "shape" or "position" can include movement of the wings 14 in an upward or downward direction, shown as an upward direction in FIG. 1. Such and upward or downward movement, is based upon a fixed root 22, such that upward or downward movement is curvature of the wing relative to the fixed root 22. Additionally, movement of the wings 14 can be in a forward or aft direction, such as toward a nose or tail or the aircraft 10. Furthermore, such movement can be a twisting movement of the wings 14, such as twisting about a longitudinal axis of the wings. Further yet, such movement can be a combination of any movement described above, or can be any movement, change in shape, or change in position of the wings 14 due to gust loading acting on the wings 14 of the aircraft 10 during flight.

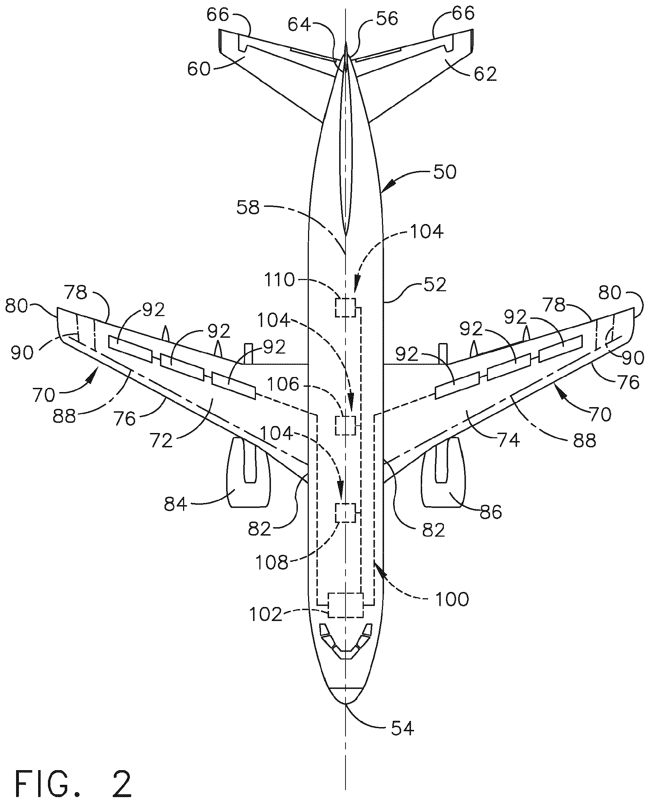

Referring now to FIG. 2, another aircraft 50 includes a fuselage 52 extending between a nose 54 and a tail 56, defining a longitudinal centerline 58 therebetween. A tail section 56 includes a first horizontal stabilizer 60, a second horizontal stabilizer 62, and a rudder 64, or vertical stabilizer. An elevator 66 is provided on each of the first and second horizontal stabilizers 60, 62.

A pair of wings 70, as a first wing 72 and a second wing 74, mount to and extend from the fuselage 52. Each wing 72, 74 includes a leading edge 76 and a trailing edge 78, and extends from a tip 80 to a root 82. A first engine 84 is provided on the first wing 72 and a second engine 86 is provided on the second wing 74. A spar 88, schematically shown in broken line, extends along and interior of each wing 72, 74, with ribs 90 coupled to the spar 88, forming a structural frame for the first and second wings 72, 74. While only a single spar 88 and two ribs 90 are shown in each of the first and second wings 72, 74, it should be understood that any number of spars 88 and ribs 90 are contemplated, as may be suitable for the particular aircraft 50 or wings 72, 74 thereof.

One or more spoilers 92 are provided on each of the first and second wings 72, 74, shown as three spoilers 92 on each wing 70. The spoilers 92 can form a portion of the wings 70 that extend away from the surface of the wing 70, while remain flush with the wings 70 when the spoilers 92 are not operational. Optionally, the spoilers 92 can be actuable to open an opening in the wings 70, permitting a volume of air to pass through the wings 70. It is preferred that each wing 70 includes the same number of spoilers 92, in the same position to ensure level flight during simultaneous operation of the spoilers 92.

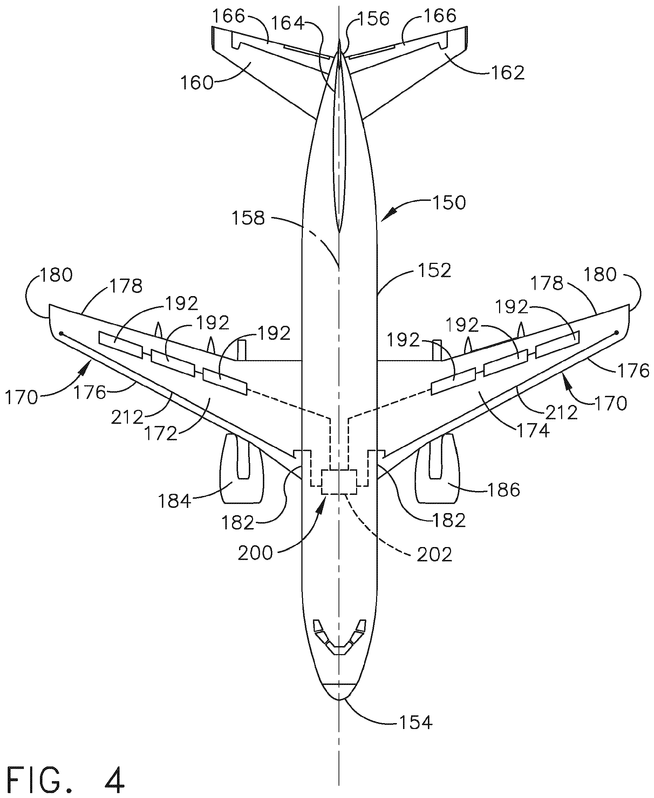

A system, such as a wing loading reduction system 100, can be included on the aircraft 50. The wing loading reduction system 100 can include a controller module 102 and a set of sensors 104, illustrated as a first sensor 106, a second sensor 108, and a third sensors 110, and can be interconnected with one or more of the spoilers 92. The sensors 104 can be positioned to have visibility of the wings 14, such as along the fuselage 12, or can be positioned at various positions to measure the wings 14. In non-limiting examples, the sensors 104 can be one or more of a camera, an ultrasound sensor, a radio detection and ranging (RADAR) sensor, a light imaging detection and ranging (LIDAR) sensor, or any other sensor suitable for measuring a position or shape of the wings 70, such as fiber optical sensors, described in FIG. 4. The sensors 104 communicatively couple to the controller module 102. The first sensor 106 can be provided at a center of the fuselage 52, equidistant from the nose 54 and the tail 56. In another example, the sensors can be positioned at 1/3 distance or 2/3 distance between the nose 54 and the tail 56. Alternatively, the first sensor 106 can be aligned with a span-line axis of the wings 70, where a span-line is defined extending between the tip 80 and the root 82 of the wings, equidistant from the leading edge 76 and the trailing edge 78. Furthermore, one or more of the sensors 104 can be positioned on top of the fuselage 52, aligned with the centerline 58 of the fuselage 52. In any case, the positioning of the sensors 104 should be such that the sensors 104 can make suitable positional or shape measurements of the wings 70.

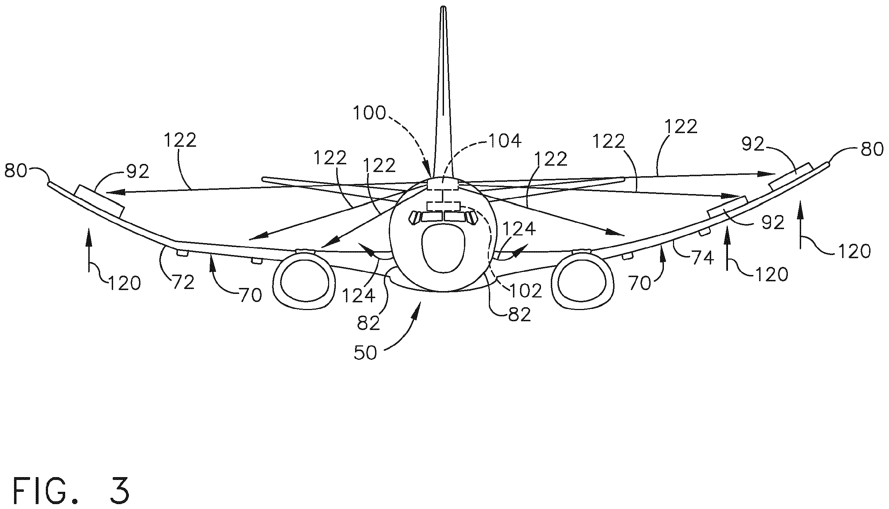

Referring now to FIG. 3, operation of the wing loading reduction system 100 can include measuring a shape of the wings 70 with one or more of the sensors 104. Measuring a position of the wings 70 can include determining an initial position for the wings 70 prior to flight, during cruise, or at any other suitable time, and periodically monitoring any variation in wing position from the initial position. Similarly, measuring a shape of the wings 70 can include determining an initial shape for the wings 70 prior to flight, during cruise, or at any other suitable time, and periodically monitoring the wings 70 for any change in shape resultant of movement of the wings 70 during flight. Such measurements can be provided as a signal from the sensors 104 to the controller module 102. The controller module 102 can utilize a processor to interpret the signals from the sensors 104 to determine the position or shape of the wings 70, or a change in shape or position of the wings 70.

During flight, environmental conditions such as weather, pressure, wind, or other environmental conditions can generate gust loads 120, which can act upon the wings 70. Such gust loads 120 can results in an uncontrolled increase in lift at the wings 70, which provide a bending moment 124 at the wing root 82. The gust loads 120 acting upon the wings 70 can bend and move the wings 70, which can result in a change in shape or position of the wings 70, measurable by the sensors 104. The gust loads 120 are not always equal at both the first wing 72 and the second wing 74. As shown, the gust load 120 at the first wing 72 is local toward the tip 80 of the first wing, while the gust load 120 at the second wing 74 is local at both the tip 80 as well as somewhat spaced from the tip 80. Therefore, the first wing 72 is oriented in a shape or position that is different from the second wing 74.

The sensors 104 measure discrete changes in shape of each of the wings 70 to determine local gust loads 120 along the wings 70, as illustrated by arrows 122. The sensors 104 generate a signal representative of the changes in shape of the wings 70 and provide the signal to the controller module 102. The controller module 102 can measure the change in shape, as well as which portion or portions of the wings 70 have experienced a change in shape. Based upon said changes in shape, the controller module 102 send a signal to one or more spoilers 92 to deploy one or more spoilers 92 to reduce the local gust load 120. The deployment of the spoilers 92 can be discrete, or can be to all spoilers across the wings 70. More specifically, deployment of the spoilers 92 can be individually, or can be collectively, as controlled by the controller module 102, or as defined by the local gust loads 120. Deployment of the spoilers 92 can reduce the lift generated by the gust load 120, which can optimize the lift profile for the wings 70. As the gust loads 120 can be different across the wings 70, the sensors 104 are able to measure local changes in shape, and locally deploy the spoilers 92 based upon the current flight envelope. Deployment of the spoilers 92 can ensure that the bending moment 124 at the root 82 of the wings 70 remains below a threshold bending moment for the wings 70. Such a threshold bending moment can be based on the structural characteristics of the particular wing or wings of the individual aircraft or design thereof. Calculations, such as a finite element analysis, can determine what the limit loading would be for the particular wing. The threshold bending moment can be determined based upon said limit loading. Utilizing the sensors can provide for measure the loading and then reducing the loading prior to reaching the threshold bending moment. Therefore, extra structural material can be removed from the wing to minimize weight. Such removal can require adjustment of the threshold bending moment, utilizing finite element analysis, for example. The sensors can further ensure that the bending moment remains below the adjusted threshold bending moment, providing for the wings having lesser material and therefore lesser overall weight.

Furthermore, the spoilers 92 need not be either undeployed or fully deployed, but can be partially deployed. Such a partial deployment can be based upon the present gust load, or the present bending moment 124, which can be determined as a function of the change in the shape or position of the wings 70. For example, a greater change in shape or position from an initial position can be representative of a greater gust load, which can represent a greater bending moment 124 at the root 82 of the wings 70. As such, partial deployment of the spoilers 92 can be based upon the present change in shape or position of the wings 70, as measured by the sensors 104, while full deployment of the spoilers 92 can be based upon a threshold shape or position of the wings 70. Therefore, the sensors can provide for feedback, which can provide for a continuous reduction of loading on the wing, which can result in smoother flight.

Measurements of the wings 70 by the sensors 104 can be made continuously throughout flight of the aircraft 50. For example, measurements of the change in shape can be continuously monitored, being continuously compared with an initial position, or with a prior measurement, to determine a present gust load, or a present change in gust load. Additionally, measuring of the wings 70 can be done discretely, on demand, or can be based upon one or more phases of flight, or in response to acceleration or another flight condition. A present change in gust load can be based upon a change in shape or position or the wings 70 relative to a prior measurement of one or more of the sensors 104. As s gust load increases or decreases, it acts upon the wings 70, resulting in a change in shape or position of the wings 70. The controller module 102 can store or record rates of change in shape or position of the wings 70, which can be representative of the strength of a gust load. Such stored rates can be utilized in future analysis of the controller module 102 to anticipate movement or positioning of the wings based upon the gust loads, which can be used to determine spoiler deployment. As such, the system can anticipate the gust loading, as opposed to being only reactive to gust loading.

Furthermore, the sensor measurement can be specific to each wing 70, as well as to each local portion of the wings 70. As such, the wing loading reduction system 100 can utilize deployment of the spoilers 92 to perform lift balancing among the two wings 70, in order to provide a balanced and stabilized flight.

The wing loading reduction system 100 as described herein utilizing one or more sensors 104 to monitor a shape of the wings 70 can deploy one or more spoilers to reduce local wing loading to reduce wing bending moment 124. The wing loading reduction system 100 provides for reducing overall structural weight for the wings of an aircraft, where a traditional aircraft requires a system of spars and ribs suited to withstand worst-case scenario gust loading. The wing loading reduction system 100 permits reduction of the required system of spars and ribs, reducing overall weight and complexity for the wings of the aircraft. Additionally, a reduction in weight provides for improved specific fuel consumption for the aircraft. Furthermore, locally deploying the spoilers 92 based upon a change in shape of the wings can provide for local reduction in gust loading, which can provide for local balancing of the lift profile for the aircraft, which can provide for a smoother flight. Furthermore, utilizing the wing loading reduction system 100 provides for reducing the bending moment 124 for the wings or the aircraft. Further still, a tight control of the wing bending moment 124 for the flight envelope operating through turbulence can provide for higher flight efficiency, a reduction of induced drag, and further improved specific fuel consumption. Additionally, as needed, induced drag or lift drag, being proportional to the amount of lift generated, is achieved by elliptical lift distribution across the span of the wings. Thus, discrete measurement of the wings by the sensors can provide for deployment of the spoilers to provide induced drag to modify lift distribution evenly across the wings.

Referring now to FIG. 4, another aircraft 150 can be substantially similar to the aircraft 50 of FIG. 2. As such, similar numerals will be used to describe similar elements, increased by a value of one hundred, and the discussion will be limited to differences between the two. Each wing 170 of the aircraft 150 includes an optical fiber sensor 212 extending at least partially between the root 182 and the tip 180 of the wings 170. The optical fiber 212 can communicatively couple to the controller module 202. The controller module 202 can measure a change in the shape of position of the wings 170 via the optical fiber sensor 212. For example, utilizing Fiber Bragg grating, a change in shape or position of the wings 170 can be translated to the optical fiber sensor 212.Fiber Bragg grating utilizes interference to create a periodic intensity distribution along the interference pattern. A change in shape of the optical fiber can result in a change in the interference pattern distribution. Such a change in the pattern distribution can be resultant of a change in shape or position of the wing 170 carrying the optical fiber sensor 212. Thus, Fiber Bragg grating can utilize a change in the interference pattern to represent a change in shape or position of the optical fiber 212 due to the change in shape or position of the wings 170.

In one example, the optical fiber can be formed as a portion of the skin of the wings 170, such as embedded into a carbon composite on the exterior of the wings 170. Alternatively, the optical fiber sensor 212 could extend interior of the wings 170, such as along spars or ribs within the wings 170.

In operation, a change in shape of the wings 170 as measured by the optical fiber sensor 212, as variations in the wavelength of light passing along optical fibers of the optical fiber sensor 212, which can be communicated as a signal to the controller module 202. Based upon the change in shape of the wings 170, the controller module 202 can operate one or more of the spoilers 192 to actuate to reduce the lift along the wings 170, effectively reducing the bending moment for the wings 170.

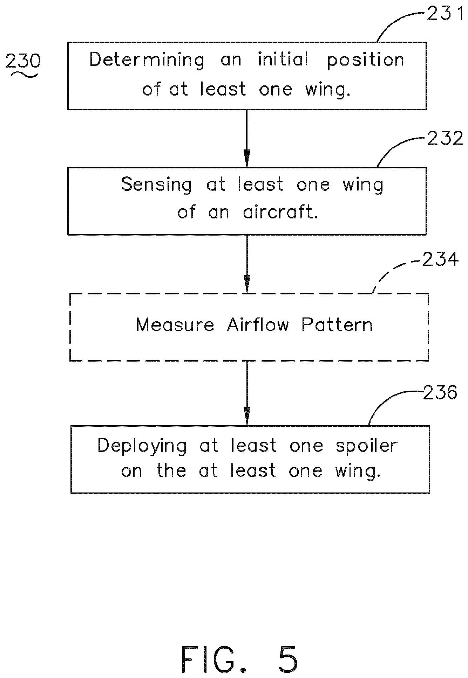

Referring now to FIG. 5, a non-claimed method 230 of reducing wing loading on an aircraft having a fuselage with at least one wing with deployable spoilers can include: at 231, determining an initial position of the at least one wing; at 232, sensing at least one wing of an aircraft, which can include sensing, with a sensor, a change in position of the at least one wing relative to the initial position of the at least one wing. The sensing at 232 can further include determining when the sensed change in position exceeds a predetermined threshold, which can be determined by a controller receiving measurements from one or more sensors, for example. Optionally, at 234, the method can include measuring an airflow pattern. At 236, the method 230 can include deploying at least one spoiler of the deployable spoilers when it is determined that the sensed change in position exceeds the predetermined threshold.

At 232, sensing the at least one wing can include sensing one of the wings 70, 170 of the aircraft 50, 150 with one or more of the sensors 104, 212. According to embodiments, sensing with the sensors 104, 212 includes measuring a change in shape of the wings 70, 170 to determine the loading on the wings 70, 170. Such a loading can be representative of a bending moment on the wings 70, 170, or at the root 82, 182 of the wings 70, 170. The sensor 104, 212 can be any sensor 104, 212 as described herein, such as an ultrasound sensor, a LIDAR sensor, a RADAR sensor, a camera, or an optical fiber sensor. The optical fiber, for example, can utilize Fiber Bragg grating to sense the change in position or shape. The sensor can further determine when the change in shape, or a loading based thereon, exceeds a predetermined threshold or value. Such a predetermined threshold can be based upon a change in shape relative to an initial position of the wing, which can be measured prior to flight, or during flight, such as at cruise. Similarly, the predetermined threshold can be a predetermined loading on the wing, or a predetermined bending moment based upon the loading or the change in position or shape.

The method can further include wherein determining a loading on the at least one wing based on the sensed change in position of the at least one wing. Furthermore, the method can include wherein deploying the at least one spoiler is when it is determined that the loading on the at least one wing exceeds a predetermined loading threshold, such as a maximum loading for the particular wing, fuselage, or aircraft. According to embodiments, the method further includes wherein the change in position of the at least one wing includes a change in shape of the at least one wing. For example, a loading on the wing causes the wing to bend, resulting in a change in shape as determined based upon the initial position of the wing. The method can include wherein the sensor is one of an ultrasound sensor, a LIDAR sensor, a RADAR sensor, a camera, or an optical fiber. The method can further include wherein sensing the change in position includes sensing with an optical fiber extending at least partially through the at least one wing utilizing Fiber Bragg grating.

A method is disclosed in which deploying the at least one spoiler includes discretely deploying the at least one spoiler relative to a local change in position of the at least one wing. A local change in position can be determined as a change in position of a discrete portion of the wing. For example, gust loading may cause the tip of the wing to bend more than the wing at the root. Therefore, the spoiler can be further deployed local to the tip to decreasing the loading at the tip. Furthermore, a local change in position of the at least one wing can be discrete, such as measured from a previously recorded position of the wing, which may differ from the initial position of the wing. Therefore, the sensors can monitor the discrete change in the wing to measure the current loading or change in loading of the wing, as opposed to only the initial position of the wing. Further, the method can include discretely deploying the at least one spoiler which includes balancing lift among a pair of wings of the at least one wing. The sensors can utilize measurements of a pair of wings on either side of the fuselage to balance the loading with discrete deployment of the spoilers. This can provide for a smoother ride for the aircraft, as well as decreasing the loading on the wings. The method can further include balancing the lift, which further includes equalizing the position of the pair of wings relative to the fuselage with the at least one spoiler. Equalizing can include conforming the current shape of one wing to match another wing, in order to balance the loading on the wings to provide for level flight of the aircraft.

The method can optionally include using LIDAR to measure the shape of the wing to determine local loading based upon a change in shape of the wing. LIDAR can be used to form a point cloud to deduce a shape of the wing, or variation thereof based upon movement of the wing.

The method can optionally include, at 234, measuring an airflow pattern to anticipate a position of the wings 70, 170. A LIDAR sensor can be used to determine an anticipated bending moment based upon the airflow pattern. For example, LIDAR can alternatively be used to measure an incoming airflow pattern, which can be used to anticipate a change in shape of the wings, therefore anticipating a loading or bending moment on the wings 70, 170. Such anticipation can be used to pre-emptively deploy, or schedule deployment of the spoilers 92, 192.

At 236, the controller module 102, 202 can deploy one or more of the spoilers 92, 192, based upon a sensed change in shape of the wings 70, 170 exceeding the predetermined value or threshold. Deploying the spoilers 92, 192 provides for reducing the lift at the wings 70, 170, which can reduce loading and bending moment acting upon the wings 70, 170. The spoilers 92, 192 can be deployed discretely, based upon local shape changes to the wings 70, 170 as measured by the sensors 104, 212. Discrete deployment of the spoilers 92, 192 can provide for equalizing the lift among both wings 70, 170 to provide for an equalized position for the wings 70, 170 and a smoother flight.

The wing loading reduction system as described herein can be suitable aircraft or other vehicles subject to fluid loading along a portion of the vehicle. It should be appreciated that the wing loading reduction system provides for monitoring loading and reducing such loading with one or more spoilers on the wings. Utilizing one or more sensors, measurements of the shape of the wings can be provided to a controller module, representative of the loading on the wings. The controller module can control operation of the spoilers to locally reduce the loading along the wings via the spoilers. Therefore, effective monitoring of loading along the wings can be monitored and managed throughout flight of the aircraft. Overall weight of the wings can be decreased, requiring less structure, such as reduced spars and ribs extending along the wings. A decreased weight leads to improved specific fuel consumption. Additionally, the wing loading reduction system can provide for an improved lift profile for the aircraft, providing for a smoother flight as well as higher flight efficiency, reduced induced drag, and improved specific fuel consumption.

The aspects disclosed herein provide a controller and system for reducing bending moment for a wing of an aircraft. The technical effect is that the above described aspects enable the monitoring and measuring of a loading on the wings of an aircraft as measured by a change in shape of the wing during aircraft operation, as described herein. Such monitoring and measuring can be accomplished by utilizing one or more sensors connected to a controller, which can utilize the measurements of the sensor(s). The assembly as described herein can be suitable for different or all types of aircraft, wings, or flight implementations. It should be appreciated that the assembly provides for effectively monitoring loading on a wing and reducing the loading through deployment of one or more spoilers on the wings. Utilizing the one or more sensors, measurements of the shape of the wings can be provided to a controller module. The controller module can determine a difference in the measured position of the wing based upon an initial position of the wing to determine a loading on the wing. Utilizing the loading and change in shape, the controller can compare the current loading to a threshold loading value. If the current loading meets or exceeds the threshold, the spoilers can be deployed or partially deployed to reduce the loading on the wings. Such a controller or system can provide for real time reducing of wing loading, and can be done locally. This controller provides for real-time monitoring and change in loading, where other controllers may be unable to measure such loading where a wing velocity or acceleration is constant at maximum loading. This controller and system also provides for reducing the structural weight and complexity of the aircraft, as less structural members are required to maintain operation at a maximum loading.

## Claims

1. A controller (102) configured to reduce wing bending moment on an aircraft, the aircraft having a fuselage, at least two wings (72, 74) extending from the fuselage, at least one spoiler (92) on each respective wing (72, 74) and operable between an undeployed position and a fully deployed position, and at least one sensor (104) provided on the aircraft configured to sense a change in shape of one wing of the at least two wings (72, 74); wherein the controller (102) is configured to receive a signal from the at least one sensor (104) representative of the local change in shape of at least one wing (72, 74) of the at least two wings, and is configured to deploy at least one spoiler (92) of the at least one spoiler (92) on each respective wing (72, 74) when the sensed local change in shape of one wing of the at least two wings (72, 74) exceeds a predetermined threshold, wherein the controller (102) is configured to discretely deploy the spoiler (92) at a relative local change in shape.

2. The controller (102) of claim 1 wherein the controller (102) is configured to compare the signal to a reference signal indicative of an initial shape of the wing (70) to determine a change in shape.

3. The controller (102) of claim 2 wherein the controller (102) is configured to compare the change in shape to the predetermined threshold.

4. The controller (102) of any of claims 1-3 wherein the controller (102) is configured to determine a loading on the wing (70) based on the determined change in shape.

5. The controller (102) of claim 4 wherein the controller (102) is configured to determine when the loading exceeds a predetermined loading threshold.

6. The controller (102) of claim 5 wherein the controller (102) is configured to deploy the spoiler (92) in response to determination that the loading exceeds a predetermined loading.

7. A system for reducing wing bending moment on an aircraft having at least two wings (72, 74) extending from a fuselage, the system comprising:
at least one spoiler (92) provided on each respective wing (72, 74), and operable between an undeployed position, a fully deployed position,
wherein the at least one spoiler (92) is also operable to a partially deployed position between the undeployed position and the fully deployed position,
at least one sensor provided on the aircraft configured to sense a change in shape of at least one wing of the two wings relative to an initial shape of the wing; and the controller (102) as claimed in claim 1.

8. The system of claim 7 wherein the at least one sensor (104) includes a camera, an ultrasound sensor, a LIDAR sensor, a RADAR sensor (104), or an optical fiber.

9. The system of any of claim 7-8 wherein the at least one sensor (104) is positioned on a top of the fuselage.

10. The system of any of claims 7-9 wherein the at least one sensor (104) is aligned with a span-line of the at least one wing (70).

11. The system of any of claims 7-10 wherein the sensor (104) is positioned on the fuselage to have visibility of the change in shape of the at least one wing (70).

12. The system of any of claims 7-11 wherein the at least one sensor (104) includes two sensors (105, 106) positioned at 1/3 longitudinal length of the fuselage and 2/3 longitudinal length of the fuselage.

13. The system of any of claims 7-12 wherein the at least one sensor (104) includes a set of cameras configured to monitor the position of the at least one wing (70) from various positions.

## Patentansprüche

1. Steuerung (102), die dazu konfiguriert ist, das Tragflächenbiegemoment eines Flugzeugs zu reduzieren, wobei das Flugzeug einen Rumpf, mindestens zwei Tragflächen (72, 74), die sich vom Rumpf aus erstrecken, mindestens einen Spoiler (92) an jeder jeweiligen Tragfläche (72, 74), der zwischen einer nicht ausgefahrenen Position und einer vollständig ausgefahrenen Position bedienbar ist, und mindestens einen Sensor (104) am Flugzeug aufweist, der dazu konfiguriert ist, eine Formänderung einer Tragfläche der mindestens zwei Tragflächen (72, 74) zu erfassen; wobei die Steuerung (102) dazu konfiguriert ist, ein Signal von dem mindestens einen Sensor (104) zu empfangen, das die lokale Formänderung von mindestens einer Tragfläche (72, 74) der mindestens zwei Tragflächen darstellt, und dazu konfiguriert ist, mindestens einen Spoiler (92) des mindestens einen Spoilers (92) an jeder jeweiligen Tragfläche (72, 74) auszufahren, wenn die erfasste lokale Formänderung einer Tragfläche der mindestens zwei Tragflächen (72, 74) einen vorgegebenen Schwellenwert überschreitet, wobei die Steuerung (102) dazu konfiguriert ist, den Spoiler (92) bei einer relativen lokalen Formänderung diskret auszufahren.

2. Steuerung (102) nach Anspruch 1, wobei die Steuerung (102) dazu konfiguriert ist, das Signal mit einem Referenzsignal zu vergleichen, das eine anfängliche Form der Tragfläche (70) angibt, um eine Formänderung festzustellen.

3. Steuerung (102) nach Anspruch 2, wobei die Steuerung (102) dazu konfiguriert ist, die Formänderung mit dem vorgegebenen Schwellenwert zu vergleichen.

4. Steuerung (102) nach einem der Ansprüche 1 bis 3, wobei die Steuerung (102) dazu konfiguriert ist, eine Belastung der Tragfläche (70) basierend auf der bestimmten Formänderung zu bestimmen.

5. Steuerung (102) nach Anspruch 4, wobei die Steuerung (102) dazu konfiguriert ist, zu bestimmen, wann die Belastung einen vorgegebenen Belastungsschwellenwert überschreitet.

6. Steuerung (102) nach Anspruch 5, wobei die Steuerung (102) so konfiguriert ist, dass sie den Spoiler (92) ausfährt, als Reaktion darauf, dass festgestellt wird, dass die Belastung eine vorgegebene Belastung überschreitet.

7. System zum Reduzieren des Tragflächenbiegemoments an einem Flugzeug mit mindestens zwei Tragflächen (72, 74), die sich von einem Rumpf erstrecken, wobei das System umfasst:
mindestens einen Spoiler (92), der an jeder jeweiligen Tragfläche (72, 74) vorgesehen ist und zwischen einer nicht ausgefahrenen Position und einer vollständig ausgefahrenen Position bedienbar ist,
wobei der mindestens eine Spoiler (92) auch in eine teilweise ausgefahrene Position zwischen der nicht ausgefahrenen Position und der vollständig ausgefahrenen Position gebracht werden kann,
mindestens einen am Flugzeug vorgesehenen Sensor, der dazu konfiguriert ist, eine Formänderung von mindestens einer der beiden Tragflächen im Verhältnis zu einer ursprünglichen Form der Tragfläche zu erfassen; und die Steuerung (102) nach Anspruch 1.

8. System nach Anspruch 7, wobei der mindestens eine Sensor (104) eine Kamera, einen Ultraschallsensor, einen LIDAR-Sensor, einen RADAR-Sensor (104) oder eine optische Faser einschließt.

9. System nach einem der Ansprüche 7 bis 8, wobei der mindestens eine Sensor (104) auf der Oberseite des Rumpfs positioniert ist.

10. System nach einem der Ansprüche 7 bis 9, wobei der mindestens eine Sensor (104) auf eine Spannweite der mindestens einen Tragfläche (70) ausgerichtet ist.

11. System nach einem der Ansprüche 7 bis 10, wobei der Sensor (104) am Rumpf so positioniert ist, dass für ihn die Formänderung der mindestens einen Tragfläche (70) sichtbar ist.

12. System nach einem der Ansprüche 7 bis 11, wobei der mindestens eine Sensor (104) zwei Sensoren (105, 106) einschließt, die bei 1/3 der Längslänge des Rumpfes und bei 2/3 der Längslänge des Rumpfes positioniert sind.

13. System nach einem der Ansprüche 7 bis 12, wobei der mindestens eine Sensor (104) einen Satz Kameras einschließt, die so konfiguriert sind, dass sie die Position der mindestens einen Tragfläche (70) von verschiedenen Positionen aus überwachen.

## Revendications

1. Dispositif de commande (102) configuré pour réduire le moment de flexion des ailes d'un aéronef, l'aéronef ayant un fuselage, au moins deux ailes (72, 74) s'étendant à partir du fuselage, au moins un déporteur (92) sur chaque aile respective (72, 74) et utilisable entre une position non déployée et une position entièrement déployée, et au moins un capteur (104) prévu sur l'avion configuré pour détecter un changement de forme d'une aile des au moins deux ailes (72, 74) ; dans lequel le dispositif de commande (102) est configuré pour recevoir un signal à partir de l'au moins un capteur (104) représentant le changement local de forme d'au moins une aile (72, 74) des au moins deux ailes, et est configuré pour déployer au moins un déporteur (92) de l'au moins un déporteur (92) sur chacune des ailes (72, 74) respectives lorsque le changement local de forme détecté d'une aile des au moins deux ailes (72, 74) dépasse un seuil prédéterminé, dans lequel le dispositif de commande (102) est configuré pour déployer discrètement le déporteur (92) au niveau d'un changement de forme local relatif.

2. Dispositif de commande (102) selon la revendication 1 dans lequel le dispositif de commande (102) est configuré pour comparer le signal à un signal de référence indiquant une forme initiale de l'aile (70) afin de déterminer un changement de forme.

3. Dispositif de commande (102) selon la revendication 2 dans lequel le dispositif de commande (102) est configuré pour comparer le changement de forme au seuil prédéterminé.

4. Dispositif de commande (102) selon l'une quelconque des revendications 1 à 3 dans lequel le dispositif de commande (102) est configuré pour déterminer une charge sur l'aile (70) sur la base du changement de forme déterminé.

5. Dispositif de commande (102) selon la revendication 4, dans lequel le dispositif de commande (102) est configuré pour déterminer le moment où la charge dépasse un seuil de charge prédéterminé.

6. Dispositif de commande (102) selon la revendication 5 dans lequel le dispositif de commande (102) est configuré pour déployer le déporteur (92) en réponse à la détermination du fait que la charge dépasse une charge prédéterminée.

7. Système de réduction du moment de flexion des ailes d'un aéronef ayant au moins deux ailes (72, 74) s'étendant à partir d'un fuselage, le système comprenant :
au moins un déporteur (92) prévu sur chaque aile respective (72, 74) et utilisable entre une position non déployée et une position entièrement déployée,
dans lequel l'au moins un déporteur (92) peut également être utilisé dans une position partiellement déployée entre la position non déployée et la position entièrement déployée,
au moins un capteur fourni sur l'aéronef et configuré pour détecter un changement de forme d'au moins une aile des deux ailes par rapport à une forme initiale de l'aile ; et le dispositif de commande (102) selon la revendication 1.

8. Système selon la revendication 7 dans lequel l'au moins un capteur (104) comporte une caméra, un capteur à ultrasons, un capteur LIDAR, un capteur RADAR (104) ou une fibre optique.

9. Système selon l'une quelconque des revendications 7 à 8, dans lequel l'au moins un capteur (104) est positionné sur le dessus du fuselage.

10. Système selon l'une quelconque des revendications 7 à 9, dans lequel l'au moins un capteur (104) est aligné sur une ligne d'envergure de l'au moins une aile (70).

11. Système selon l'une quelconque des revendications 7 à 10, dans lequel le capteur (104) est positionné sur le fuselage pour avoir une visibilité du changement de forme de l'au moins une aile (70).

12. Système selon l'une quelconque des revendications 7 à 11, dans lequel l'au moins un capteur (104) comporte deux capteurs (105, 106) positionnés à 1/3 de la longueur longitudinale du fuselage et à 2/3 de la longueur longitudinale du fuselage.

13. Système selon l'une quelconque des revendications 7 à 12, dans lequel l'au moins un capteur (104) comporte un ensemble de caméras configurées pour surveiller la position de l'au moins une aile (70) à partir de différentes positions.
